# EUROPEAN PATENT SPECIFICATION

(11) **EP 1 212 571 B1**
(45) Date of publication and mention of the grant of the patent: **09.11.2005**
(21) Application number: 00951946.3
(22) Date of filing: 11.08.2000
(51) Int. Cl.: F24F 3/16, F24F 1/00

(54) **INDOOR UNIT FOR AIR CONDITIONER**
INNENRAUMEINHEIT EINER KLIMAANLAGE
UNITE EN INTERIEUR POUR CLIMATISEUR

(30) Priority: 31.08.1999 JP 24618799; 31.08.1999 JP 24618999
(43) Date of publication of application: 12.06.2002
(73) Proprietor: Toshiba Carrier Corporation, Tokyo 105-8001 (JP)
(72) Inventor: WADA, Koji, Fuji-shi, Shizuoka 416-0948 (JP); TSUCHIYA, Yasutoshi, Fuji-shi, Shizuoka 416-0946 (JP); OZAWA, Tetsuro, Numazu-shi, Shizuoka 410-0304 (JP)
(74) Representative: O'Connell, David Christopher
(86) International application number: PCT/JP2000/005386
(87) International publication number: WO 2001/016533

(56) References cited:
- US-A- 5 788 569
- PATENT ABSTRACTS OF JAPAN vol. 1999, no. 04, 30 April 1999 (1999-04-30) -& JP 11 008044 A (CORONA CORP), 12 January 1999 (1999-01-12)
- PATENT ABSTRACTS OF JAPAN vol. 1999, no. 11, 30 September 1999 (1999-09-30) -& JP 11 159838 A (CORONA CORP), 15 June 1999 (1999-06-15)
- PATENT ABSTRACTS OF JAPAN vol. 1999, no. 08, 30 June 1999 (1999-06-30) & JP 11 072240 A (CORONA CORP), 16 March 1999 (1999-03-16)
- PATENT ABSTRACTS OF JAPAN vol. 016, no. 321 (M-1279), 14 July 1992 (1992-07-14) & JP 04 090428 A (MATSUSHITA ELECTRIC IND CO LTD), 24 March 1992 (1992-03-24)
- PATENT ABSTRACTS OF JAPAN vol. 015, no. 264 (M-1132), 4 July 1991 (1991-07-04) & JP 03 087531 A (MATSUSHITA ELECTRIC IND CO LTD), 12 April 1991 (1991-04-12)

## Description

### Technical Field

The present invention relates to an indoor unit for an air conditioner comprising an outdoor unit and indoor unit.

### Background Art

The indoor unit of the air conditioner holds a heat exchanger and air blower within a unit body and, by the operation of the air blower, sucks the room air into the unit body, effects a heat exchange of the air past the heat exchanger and blows the air into the room through an air blower.

An indoor unit has been proposed in recent times which has the function of not only making the heat exchange of room air but also, as a value added feature, removing an impurity, such as dirt/dust particles, floated in the room air and cleaning it.

That is, very small dirt/dust particles are floated in the room air and, even if being inspired, they are harmless to the human body. It might be possible, however, that some adverse effect acts upon those with little resistance to disease. Thus the removal of the dirt/dust particles constitutes a very beneficial requirement.

JPN UM APPLN KOKAI PUBLICATION NO. 62-124421 and JPN PAT APPLN KOKAI PUBLICATION NO. 11-72240 disclose an air conditioner with a minus ion generator incorporated therein. In these PUBLICATIONS, minus ions are directly, or together with the heat exchanged air, supplied to the room. It is known that the minus ions, being absorbed in the human body, activates the cell structure and promotes the discharge of waste products and improves the metabolism.

The above-mentioned PUBLICATIONS simply give a description about the electrode section of the minus ion generator which is located near to an air flowing path or in the air blowing path, the details of which are not evident.

Simply generating minus ions and supplying them into the room exert a readier adverse effect onto a room occupant due to the dirt/dust particles floated in the air. There is a limit to an amount of minus ions generated at a location in the air blowing path, resulting in a poor generation of the minus ions.

Further, if the electrode section is located near to the fan of the air blower, those minus ions released from the electrode section are absorbed into a surrounding structure and their generation amount becomes unbalanced and unsteady.

It may be considered that the apparatus is grounded so as to obtain a greater potential difference relative to the electrode section. If the electrode section is located near to the ground terminal to produce an arc discharge, than an amount of minus ions generated is increased. In this case, on the other hand, there occurs the generation of ozone harmful to the human being.

If the electrode section is arranged at other than the air blowing area, that is, at an area where no air blowing speed is involved, the minus ions are less produced and, in order to compensate for this, it is necessary to extremely raise an output voltage. This leads to high running cost.

JP-A-11-008044 and JP-A-11-159858 disclose further indoor units, with air cleaning means located on the inlet side of the heat exchanger, in the form of electrodes for dust collection. They show all the features of the preamble of claim 1.

### Disclosure of Invention

A first object of the present invention is to provide an indoor unit for an air conditioner which has not only a heat exchanger and air blower but also both air cleaning means and minus ion generation means and, by specifically arranging the respective means on the basis of this, cleans the air efficiently and supplies minus ions.

According to the present invention, there is provided an indoor unit for an air conditioner which sucks room air into a unit body, effects a heat exchange of the air by a heat exchanger and blows the air into the room via an air blower, comprising air cleaning means located on an air sucking side of the heat exchanger to allow an impurity, such as dirt/dust particles, from the room air sucked into the unit body to be removed and be cleaned, and minus ion generating means located in an air blow-off path of the air blower to allow minus ions to be generated and supplied into the room.

A second object of the present invention is to provide an indoor unit for an air conditioner which has not only a heat exchanger and air blower but also minus ion generating means and, based on this, performs room air heat-exchanging function and supplies the minus ions efficiently.

According to the present invention, there is provided an indoor unit for an air conditioner which sucks room air into a body unit, effects a heat exchange of the air by a heat exchanger and blows the air into the room via an air blower, comprising a minus ion generating device located for generating minus ions in an air blow-off path of the air blower and supplying the minus ions into the room, the minus ion generating device holding a generation electrode within a protective container.

### Brief Description of Drawings

FIG. 1 is a cross-sectional view showing an indoor unit for an air conditioner according to a first embodiment of the present invention;
FIG. 2A is a model diagram for explaining component parts held within the indoor unit and their functions;
FIG. 2B is a model diagram showing another arrangement for comparison;
FIG. 3 is a perspective view showing a major section of the indoor unit;
FIG. 4 is a cross-sectional view showing an indoor unit for an air conditioner according to a second embodiment of the present invention:;
FIG. 5 is a model view for explaining component parts held in the indoor unit and their functions;
FIG. 6 is a perspective view showing a minus ion generator incorporated in the indoor unit;
FIG. 7 is a cross-sectional view showing the minus ion generator; and
FIG. 8 is a top view showing the minus ion generator and its surrounding.

### Best Mode for Carrying Out the Invention

The embodiments of the invention will be described below with reference to the accompanying drawings.

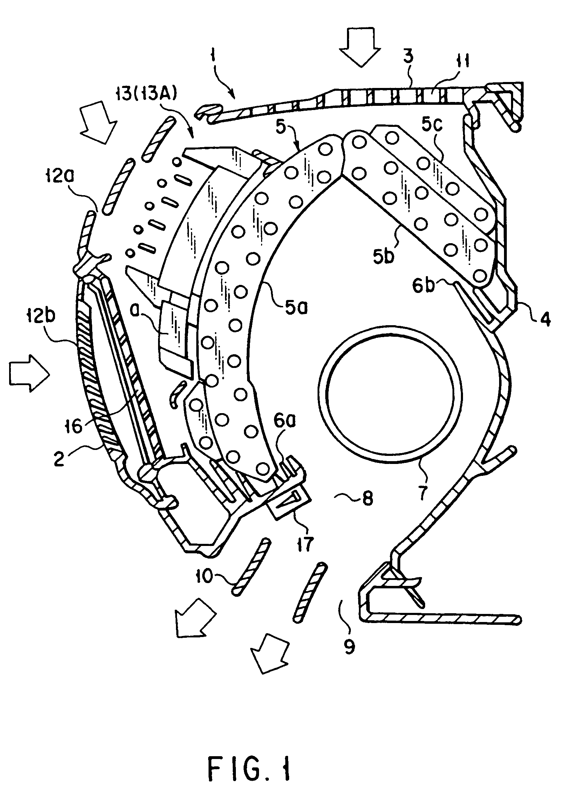

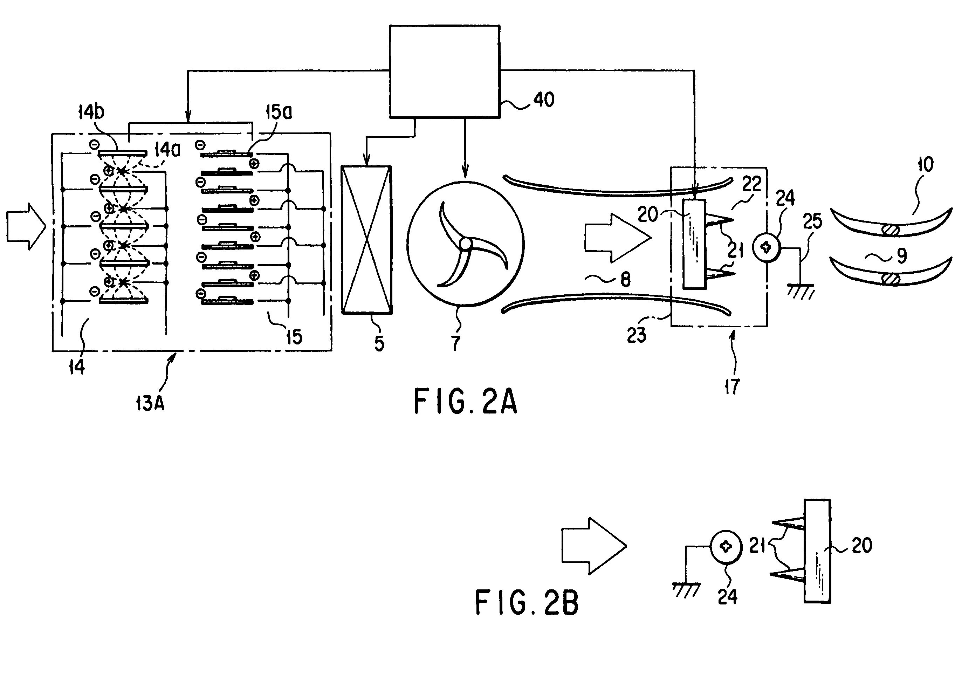

FIG. 1 is a cross-sectional view showing an indoor unit 1 of an air conditioner according to a first embodiment of the present invention. The indoor unit 1 comprises a front panel 2, a top panel 3, and a back plate 4 having an integral unit of opposite side sections, back surface section and bottom surface section and provides a box-like unit having a longer lateral section.

Within an indoor unit 1 an indoor heat exchanger 5 is arranged and has a substantially inverted V-shaped configuration in a side view. The indoor heat exchanger 5 comprises a front-side heat exchanger section 5a situated at a front face side and a back-side heat exchanger section 5b situated in a back side and, in particular, an auxiliary heat exchanger 5c is arranged along the upper surface of the back side heat exchanger section 5b and these are connected in a series array through a pipe.

A front drain pan 6a is arranged below the front-side heat exchanger section 5a and a back drain pan 6b is arranged below the back-side heat exchanger section 5b. These front and back drain pans 6a and 6b are formed integral with the back plate 4.

An indoor blower 7 is arranged between the front-side heat exchanger section 5a and a back-side heat exchanger section 5b in an inside position of the indoor heat exchanger 5 and equipped with a cross flow fan. The back plate 4 is bent from the back surface side of the indoor blower 7 below the back drain pan 6b toward the bottom section to provide an air blowing path 8 between the lower surface section of the front drain pan 6a and its extending section.

A blow-off outlet 9 is provided at the lower section of the front panel 2 which provides a forward end of the air blowing path 8 and along the width direction. An air direction guide section 10 is provided at the blow-off outlet 9 and comprised of a combination of vertical/horizontal sheet louvers to allow the direction of air from the blow-off outlet 9 to be automatically changed.

At the top panel 3 a frame-like unit is fitted with its air space formed as an upper suction inlet 11. At the front panel 2, front suction inlets 12a and 12b of different structures are provided at different stage on the upper side and lower side and a hinge structure, not shown, is provided along the upper end edge portion to provide an openable/closable suction grille relative to the indoor unit 1. The front panel 2 has a R-shaped cross-section so as to provide a predetermined spacing relative to the front-side heat exchanger section 5a of the indoor heat exchanger 5.

In air cleaning machine 13 serving as an air cleaning means is arranged in a position near to the front-side upper section of the front-side heat exchanger section 5a opposite to the front suction inlet 12a of the front panel 2. That is, the air cleaning machine 13 is situated in an air space between the front-side heat exchanger section 5a and the front panel 2.

The air cleaning machine 13 comprises an electric dust collector 13A directed to removing dirt/dust particles in a chamber and a high performance deodorizing filter of a honeycomb active carbon structure, not shown, directed to removing odor in the chamber and these are arranged to left and right in the upper section.

The electric dust collector 13A, being explained in more detail, comprises, as shown in FIG. 2A, a plus-potential charge electrode (ionizer section) 14 and minus-potential dust collection electrode (collector section) 15.

The charge electrode 14 produces a corona discharge through the application of a DC high voltage between a discharge electrode 14a and a counter electrode 14b which is called an ionization ray to ionize dirt/dust particles. The dust collection electrode 15 is a corrugated electrode laminated with sheets 15a having a conductive electrode on one surface side and given alternate plus/minus charges and adapted to suck/collect the dirt/dust particles ionized with a Coulomb force generated between the sheets.

Referring back to FIG. 1, a hand gripping section a is provided with a lower side of the electronic collector 13A and the front panel 2 comprised of the suction grille can be freely detached from the indoor unit by opening the front panel on the part of the user. In particular, it is possible to effect maintenance by removing the dirt/dust particles deposited on the dust collection electrode 15.

Further, a detachable filter 16 is mounted at a space enclosed with the hand gripping section a of the electric dust collector 13A, front surface of the lower side of the heat exchanger section 5a and front panel 2. And it is possible to effect maintenance by removing the dirt/dust particles deposited.

A minus ion generator 17 serving as a minus ion generating means is arranged on the air blowing path 8. To explain it more, this minus ion generator 17 is provided at a lower surface portion of the front drain pan 6a of the air blowing path 8 through which the air passing through the electric dust collector 13A passes.

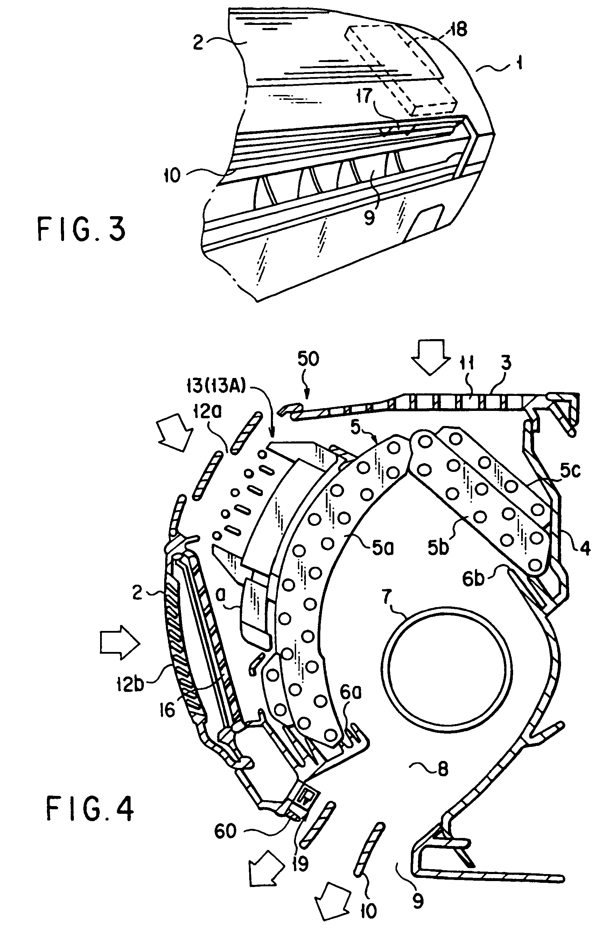

As shown in FIG. 3, in a state looking up the indoor unit 1 from the lower side of the blow-off outlet 9, part of the minus ion generator 17 is seen from one side portion of the blow-off outlet 9 through an air direction guide section 10. Further, an electric equipment box 18 containing a control device serving as a control means as will be set out below and various kinds of electric component parts are mounted at the side section of the indoor unit 1.

Referring back to FIG. 2A, the basic structure of the minus ion generator 17 comprises a minus ion generation electrode 22 having an electrode plate 20 having a connected high voltage circuit connection terminal and supplied with a high voltage and needle-like electrodes 21 integrally projected form the side surface of the electrode plate 20 and radiating minus ions from their tip ends and a protective container 23 (indicated by a dash dot line) containing the generation electrode 22 protectively.

The minus ion generator 17, earlier-explained electric dust collector 13A, and compressor and indoor air blower 7, etc., not shown, performing a heat exchange function of the indoor heat exchanger 5 are all electrically connected to a control device 40 and controlled as will be set out above.

In order for the minus ion generator 17 to radiate many more minus ions, it is necessary that a greater potential difference be set between the tip ends of the needle-like electrode 21 and the neighborhood of the their tip ends. To this end, a ground terminal 24 is mounted in the nearby region of the tip ends of the needle-like electrodes 21 of the protective container 23, and the protective container 23 is grounded through a ground line 25, thus securing a potential difference relative to the tip ends of the needle-like electrode 21.

If, for example, the minus ion generator 17 is arranged at the very near region of the indoor blower 7 as explained earlier, the emitted minus ions are absorbed on the nose and casing providing the air blowing path 8, so that an amount of their emission into the room space is largely decreased. For this reason, the minus ion generator 17 is arranged in a position near to the air blow-off outlet 9 to allow them to be radiated through the vertical/horizontal louvers of the air direction guide section 10.

Further, the needle electrodes 21 projected from the electrode plate 20 have their tip ends oriented from the blowing air upstream side of the air blowing path 8 toward a downstream side and the ground terminal 24 is mounted on the downstream side of the needle-like electrodes 21.

If, as shown in FIG. 2B, for example, the tip ends of the needle-like electrodes 21 is placed in an opposite direction with a ground terminal 24 mounted on the upstream side of the blowing air, those minus ions radiated from the tip ends of the needle electrodes 21 are almost all absorbed in the electrode plate 20 and there occurs a lowering in their emission amount into the indoor space, so that this arrangement is not adopted.

Thus arranged is the indoor unit of the air conditioner and, with an operation start button of a remote control unit, not shown, depressed, the control device 40 performs a refrigeration cycle operation relative to the indoor heat exchanger 5 and operation control of the indoor air blower 7.

The room air is sucked, into the indoor unit 1, from the suction inlets 12a, 12b, 11 of the front panel (suction grille) 2 and top panel 3 in the indoor unit 1. In particular, the room air sucked from the front suction inlet 12a directly passes through the electric dust collector 13A and collects the dirt/dust particles present in the room air and cleans them.

The cleaned air is conducted into the indoor heat exchanger 5, where it is heat exchanged, and further into the air blowing path 8 via the indoor air blower 7 and blown into the room space via the blow-off outlet 9. In the neighborhood of the blow-off outlet 9, minus ions are radiated from the minus ion generator 17 and supplied into the room space.

The cleaned air blown out of the blow-off outlet 9 after being heat exchanged never contains dirt/dust particles attenuating the minus ions, so that the minus ions radiated from the minus ion generator 17 are supplied, as they are, into the room without being attenuated.

In this way, the room air circulates through the above-mentioned route and is conducted into the electric dust collector 13A, indoor heat exchanger 5 and minus ion generator 17 in the indoor unit. By doing so, the air cleaning, desired air condition and supplying of minus ions imparting a favorable effect to the human body are effectively done.

In addition thereto, the air cleaning machine 13A arranged at the air suction side of the indoor heat exchanger 5 has the electric dust collector 13A comprising a plus potential charge electrode 14 and a minus potential dust collection electrode 15 and, into the air blowing path 8 on this downstream side, the minus ion generator 17 is arranged.

Thus, the dirt/dust particles in the air which passes through the electric dust collector 13A is charged to a plus potential by the charge electrode 14 and positively attracted to the minus-charged dust collection electrode 15 to allow them to be neutralized and then be blown via the blow-off outlet 9 into the room.

Even if, at this time, somewhat plus-charged air remains as active oxygen, some are neutralized by part of the minus ions radiated from the minus ion generator 17 at the downstream side of the blowing air, so that the high air cleaning effect by the electric dust collector 13A and minus ion generation of better efficiency are obtained as a synergistic effect.

Further, the control device 40 effects control under which the air cleaning function (this is, the dust collection function by the electric dust collector 13A) by the air cleaning machine 13 and minus ion generation function by the minus ion generation device 17 are done in an interlocking relation.

The minus ions are liable to be absorbed into the dirt/dust particles and greatly influenced due to the presence of these. However, during the operation of the minus ion generator 17, the operation of the air cleaning machine 13 is always done simultaneously to allow any impurity in the air to be removed, so that it is possible to generate minus ions in improved efficiency.

Further, the control device 40 effects control under which the heat exchange function by the indoor heat exchanger 5, air cleaning function by the air cleaning machine 13 and minus ion generation function by the minus ion generator 17 are performed in an interlocking relation.

It is known that the generation amount of the minus ion by the corona discharge is largely influenced due to the presence of the dirt/dust particles and that the higher the humidity in the air the more the generation amount of the minus ions. From this viewpoint, by performing an air conditioning operation simultaneously to allow the humidity in the air to be lowered it is possible to more improve the generation efficiency of the minus ions.

The control device 40 performs control under which, when the electric dust collector 13A as the air cleaning machine 13 is detected as being abnormal, the functions of the electric dust collector 13A and minus ion generator 17 are stopped.

Since the generation amount of minus ions is greatly influenced by the presence of the dirt/dust particles, if the electric dust collector 13A does not work, the generation amount of minus ions at the minus ion generator 17 is extremely lowered and a waste operation results. Thus, if the electric dust collector 13A is stopped when its abnormal state is detected, the minus ion generator 17 is also stopped in interlock-therewith and continued poor-efficient operation is prevented.

When the front panel (suction grille) 2 of the indoor unit 1 is opened at a time of maintenance, etc., the controller 40 effects such control that the operations of the electric dust collector 13A and minus ion generator 17 are caused to be immediately stopped.

That is, when the suction grille 2 is opened, then the electric dust collector 13A is exposed. To this place a high-voltage power supply is delivered and it is necessary to interrupt the current supply for safety. A high-voltage power supply is delivered also to the minus ion generator 17. In this case, however, it is arranged at the air supply path 8 and it provides no bar to the opening/closing of the suction grille 2. Therefore, there is no danger of contacting with the minus ion generator 17. However, the current supply is interrupted subsequent to the stopping of the current supply to the electric dust collector 13A and continued operation at poor efficiency is prevented.

FIG. 4 is a cross-sectional view showing an indoor unit 50 of an air conditioner according to a second embodiment of the present invention. In the second embodiment of the present invention, the same reference numerals are employed to designate parts performing the same functions as those of the above-mentioned first embodiment and any detailed explanation is, therefore, omitted.

In the second embodiment, a minus ion generator 19 as a minus ion generating means is different from the minus ion generator 17 in that it is provided at an area extending more toward a blow-off outlet 9 side than a lower surface portion of a front drain pan 6a of an air blowing path 8 through which air passing through an electric dust collector 13A passes and provided on one side of the blow-off outlet 9. It is to be noted that the minus ion generator 19 has the same structure as that of the minus ion generator 17.

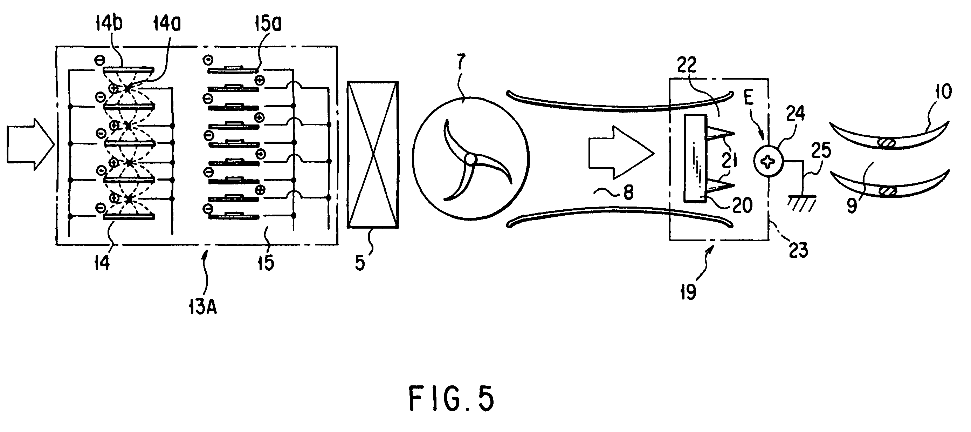

As shown in FIG. 5, the basic structure of the minus ion generator 19 comprises a minus ion generation electrode 22 comprising an electrode plate 20 supplied with a high voltage and needle electrodes 21 provided integral with a side surface of the electrode plate 20 to allow minus ions to be radiated from their tip ends, and a protective container 23 (indicated by a dash dot line) containing the ion generation electrode 22 protectively.

In the minus ion generator 19, in order for many more minus ions to be radiated, it is necessary that a greater potential difference be set between the tip end of the needle-like electrode 21 and a surrounding area of the tip end. To this end, a ground area E as will be set out below is provided at an area near to the tip end of the needle-like electrode 21 of the protective container 23. And the protective container 23 is grounded through a screw-like ground terminal 24 and a ground line 25, thus ensuring a potential difference relative to the tip ends of the needle-like electrodes 21.

Even in the minus ion generator 19, it is arranged at the blow-off outlet 9 so as to prevent absorption of the emitted minus ions. Further, the needle-like electrodes 21 projected from the electrode plate 20 have their tip ends so arranged as to be oriented from the upstream side of blowing air at the air blowing path 8 toward a downstream side. And the ground terminal 24 is mounted on the downstream side of the needle-like electrode 21. It is to be noted that, even in the second embodiment, the setting of the tip ends of the needle-like electrodes 21 in an opposite direction as shown in FIG. 2B above and mounting of the ground terminal 24 in an opposite relation thereto and on the upstream side of the blowing air are not adopted.

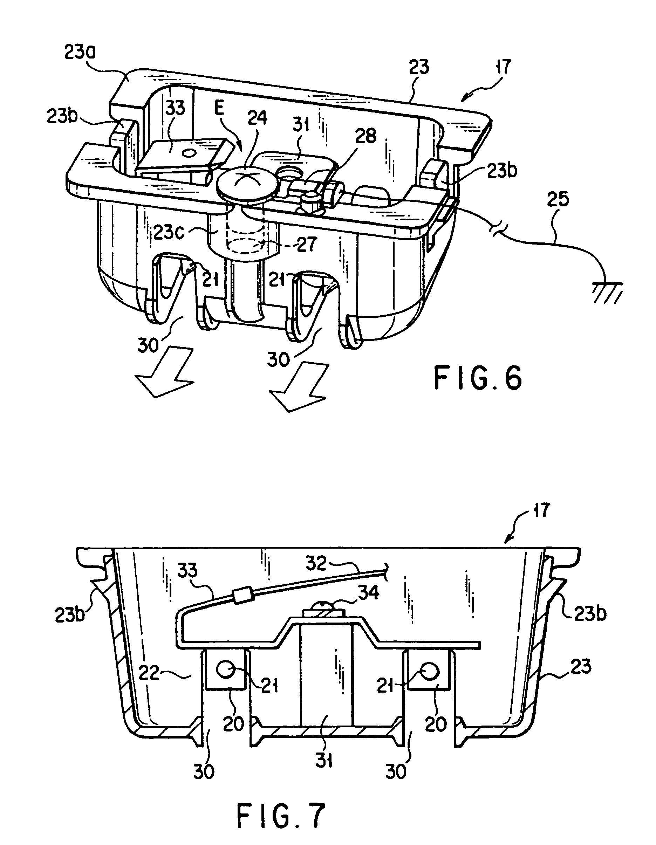

The detailed arrangement of the minus ion generator 19 will be explained below on the basis of FIGS. 6 to 8. This minus ion generator 19 is contained within the protective container 23. The protective container 23 has a substantially rectangular-box-like configuration opened at a top surface side and having a flange 23a formed integral therewith along the open edge and is subjected at a whole surface to a given antistatic treatment. Engaging claws 23b are integrally provided at left and right flange portions and can be detachably mounted by one operation on the mounting area as already set out above.

The ground area E is provided at a middle area on the front side of the protective container 23. That is, at the middle of the flange 23 a boss 23c is formed as one unit from the top surface toward the middle portion of the side wall of the container. A lower hole 27 extends from the upper end toward the lower end of the boss 23c and the ground terminal 24 is threadably inserted from the top surface side. A ground terminal 28 is fixed between a head section of the ground terminal 24 and the top end surface of the protective container 23 and the ground line 25 is connected to the ground terminal 28.

A whole length of the ground terminal 24 is selected to be shorter than that of the boss 23c and, hence, the lower end of the ground terminal 24 is not projected from the lower end of the boss 23c. Further, one pair of slits 30, 30 are opened in the protective container 23. These slits 30 are located at the left and right sides of the boss 23c of the protective container 23 and provided across the whole bottom surface and over those front and back surface portions in a mutually parallel relation.

A support leg 31 is integrally provided upright from, for example, the bottom of the protective container 23 and a mounting screw 34 for fixedly mounting a high voltage circuit connection terminal 33 on the support leg 31 is threaded into the support leg.

A high voltage lead line 32 extends from a high voltage circuit connection terminal 33 and this is electrically connected to a high voltage circuit in an electric equipment component box 35 provided at one side of the indoor unit 1. Further, the high voltage circuit connection terminal 33 extends to the left and right and the electrode plate 20 as earlier set out above is provided to the left and right ends.

The needle-like electrodes 21 are projected from the electrode plate 20 and provided as one pair of left and right electrodes with their tip ends opposed to a pair of slits 30. Thus, a generation electrode 22 comprising two sets of electrode plates 20, 20 and needle-like electrodes 21, 21 is held in the protective container 23.

The protective container 23 with the minus ion generation electrode 22 held therein is mounted in a predetermined position of the blow-off outlet 9 and, by doing so, the slits 30 of the protective container 23 are set along an air blowing direction and one pair of needle-like electrodes 21 are oriented in parallel to the air blowing direction and their tip ends are oriented toward the space of the room through the blow-off outlet 9 at the downstream side. The electrode plate 20 having projecting needle-like electrodes 21 is located more on the air-blowing upstream side than the needle-like electrode 21.

The ground area E provided at the protective container 23 is situated in a place spaced apart from the minus ion generation electrode 22. And the ground area E is spaced apart from the minus ion generation electrode 22 by a distance (for example, about 5 mm at -5000V) at which there occurs no arc discharge. Further, the ground area E is situated in a position displaced from on an extension line of the forward end of the minus ion generation electrode 22 and situated on the leeward of the blowing air.

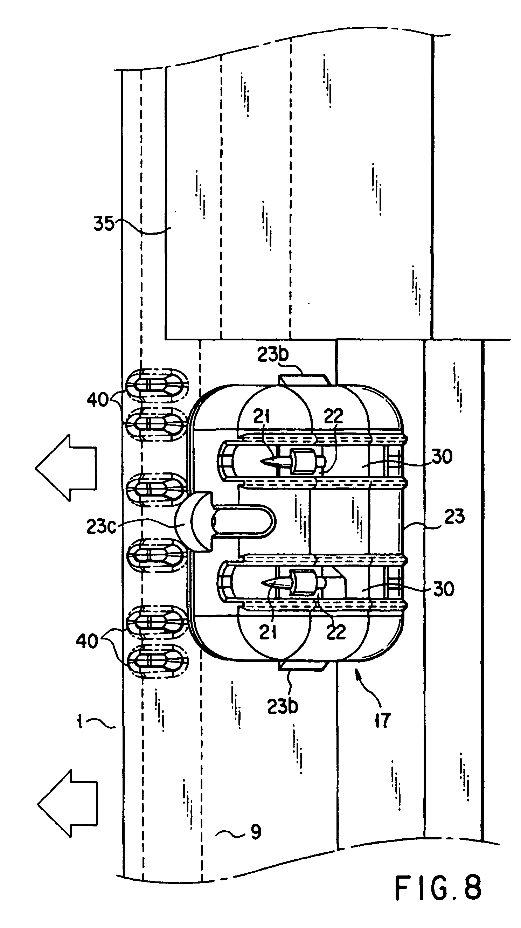

As shown in FIGS. 4 and 8 in particular, at the upper surface wall end portion of the air blow hole 9 where the minus ion generator 19 is mounted, a guard section 40 comprised of a plurality of projections is provided at an area opposite to the minus ion generator 19, so that the minus ion generator 19 is shielded from the blow-off outlet 9 and prevents an entry of a foreign matter.

In the indoor unit of the thus arranged air conditioner, an operation is effected as in the first embodiment above and the minus ion generator 19 provided on the blow-off outlet 9 acts to allow the radiation of the minus ions and supplies them into the room space without being attenuated. And by the electric dust collector 13A, indoor heat exchanger 5 and minus ion generator 19 in the indoor unit, the air cleaning, desired air conditioning and supplying of minus ions act favorably on the human being more efficiently.

The minus ion generator 19 holds the generation electrode 22 within the protective container 23 and the mounting position of the generation electrode 22 is held fixed. By mounting the protective container 23 at a predetermined area of the air blowing path 8 it is possible to mount the generation electrode 22, thus ensuring its readier mounting.

Further, the generation electrode 22 comprises the electrode plate 20 and needle-like electrodes 21. The needle-like electrodes 21 are made parallel to the air blowing direction of the air blowing path 8 and held within the protective container 23 to have their tip ends oriented toward the leeward side of the blowing air. The needle-like electrode 21 radiates minus ions toward the air blowing direction and the minus ions are borne on the heat-exchanged air and sent into the room effectively.

Here, the paired needle-like electrodes 21, 21 are arranged parallel to each other to allow the minus ions to radiate simultaneously from the respective needle-like electrodes 21, so that a greater amount of minus ions is constantly supplied into the room.

Further, the needle-like electrodes 21 are made integral with the electrode plate 20 and can be positively fixed in place in the protective container 23. In addition, the electrode plate 20 is arranged on the blowing air upstream side of the needle-like electrodes 21 and this positional setting of the electrode plate 20 exerts no adverse influence on the generation of the minus ions.

Further, the slits 30 in the protective container 23 are provided at those areas opposite to the tip ends of the needle-like electrodes 21 and along the air blowing direction of the air blowing path 8. The protective container 23 holding the generation electrode 22 therein communicates with the air blowing path 8 through the slits 30. Therefore, the blowing air is sent through the slits 30 toward the surrounding area of the generation electrode 22. As a result, no temperature difference is not created between an inside and an outside of the protective container 23 and no deposition of dew drops in the container 23 and on the generation electrode 22 is positively prevented.

The ground area E provided on the protective container 23 is provided in a position spaced apart from the generation electrode 22 held within the protective container 23. That is, when the surface of the protective container 23 is charged to a minus ion, a potential difference between the generation electrode 22 and its surrounding is reduced, thus leading to a decrease in the radiation of the minus ions. By allowing charges on the surface of the protective container 23 to leak from the ground area E it is possible constantly secure a potential difference between the generation electrode 22 and the surrounding and a better condition is created under which the minus ions are likely to be produced.

If, on the other hand, the ground area E is provided in a position too close to the generation electrode 22, then an arc discharge occurs and there is a danger of a spark being produced and hence of ozone harmful to the human body being produced. Therefore, the ground area E is provided in a position spaced apart from the generation electrode 22 to cause the charges on the surface of the protective container 23 to be released, so that the radiation of the minus ions is stabilized.

Further, the ground area E of the protective container 23 is so provided as to be spaced apart from the minus ion generation electrode 22 by a distance at which no arc discharge occurs. Therefore, a spark resulting from an arc discharge does not occur and, at a mutual nearby state, it is possible to obtain a greater potential difference relative to the generation electrode 22 and hence to obtain a greater radiation amount of minus ions.

Further, since the ground area E of the protective area 23 is provided at a position deviated from on a forward end extension line of the minus ion generation electrode 22, the minus ions radiated from the tip end of the needle-like electrode 21 are prevented from being sent to the ground area E and being discharged, so that their radiation into the room can be done effectively.

Further, the ground area E of the protective container 23 is provided at the air blowing leeward side of the minus ion generation electrode 22. That is, the minus ions radiated from the tip ends of the needle-like electrodes 21 are such that the greatest potential difference is near to the earth area E and their emission effect can be enhanced. By providing the ground area E on the leeward side, the generation amount of minus ions is increased and the radiation of the minus ions into the room is done effectively.

Further, the ground area E of the protective container 23 has its ground line 25 connected by the ground terminal 24 to a boss 23c provided integral with the protective container 23. The boss 23c is integral with the protective container 23 and, by mounting the screw 24 into the boss 24, it is possible to take a ground connection positively.

Further, the lower hole 27 pierces the boss 23c and the ground terminal 24 shorter in length than the boss 23c is mounted in the lower hole 27 and the ground line 25 is connected, resulting in no abnormal discharge being produced between the generation electrode 22 and the ground terminal 24. In addition, the generation electrode 22 receives an effect from the forward end of the ground terminal 24 in the lower hole 27 to allow an increase in amount of the minus ions. And the minus ions are radiated effectively toward the blow-off outlet 9 matched to the direction of the boss 23c.

Since the whole surface of the protective container 23 is subjected to an antistatic treatment, the protective container 23 is prevented from being electrically charged, with the result that a potential difference is constantly secured between the generation electrode 22 and the surrounding. Thus the condition is set under which the minus ions are likely to be generated, and the minus ions are stably radiated.

Further, the protective container 23 is so mounted that, at an upper surface wall near to the blow-off outlet 9 providing the air blowing path 8, the generation electrode 22 is exposed to the air blowing path 8. Thus, the mounting of the protective container 23 is positively done and it is also possible to supply the minus ions into the room positively.

Although, in the above-mentioned embodiment, the ground terminal 28 is mounted by the ground terminal 24 on the boss 23c providing the ground area E, the present invention is not restricted thereto and the ground terminal 24 itself may be used for ground.

## Claims

1. An indoor unit (1) for an air conditioner which sucks room air into a unit body, effects a heat exchange of the air by a heat exchanger (5) and blows the air into the room via an air blower (7), comprising:
air cleaning means (13) located on an air sucking side of the heat exchanger (5) to allow an impurity to be removed from the room air sucked into the unit body and be cleaned; and
minus ion generating means (17,19) located in an air blow-off path of the air blower (7) to allow minus ions to be generated and supplied into the room;
wherein said air cleaning means (13) has an electric dust collection machine (13A) comprising: a charging electrode (14) and a dust collecting electrode (15), located downstream of the charging electrode (14);
control means (40) for effecting control in interlock with an air cleaning function by the air cleaning means (13) and minus ion generation function by the minus ion generating means (17,19); the minus ion generating means (17,19) being comprised of a minus ion generating electrode (22) for radiating the minus ions into the cleaned air and supplying the minus ions into the room;
**characterized in that** the charging electrode (14) comprises:
a discharging electrode (14a) and a facing electrode (14b) for charging dust which is contained in the room air to a plus potential by causing corona discharge, through the application of a DC high voltage between said discharging electrode (14a) and said facing electrode (14b);
**in that** the dust collecting electrode (15) is charged to a minus potential, for adsorbing the dust which is plus charged.

2. An indoor unit for an air conditioner according to claim 1, wherein said control means (40) is provided for effecting control in interlock with a heat exchanging function by the heat exchanger (5), an air cleaning function by the air cleaning means (13) and a minus ion generation function by the minus ion generating means (17,19).

3. An indoor unit for an air conditioner according to claim 1, wherein the unit body has a suction grille openable/closable on a suction side of the room air,
said control means (40) is provided for effecting such control that, when the air cleaning means (13) becomes an abnormal state, or when the suction grille is set in an open state, the air cleaning means (13) and minus ion generating means (17,19) stop their functions.

4. An indoor unit for an air conditioner as claimed in any preceding claim, wherein said minus ion generating means (17,19) is located near a blow-off port (9) of an air blow-off path of the air blower (7) and attached to an upper wall of the blow-off port (9),
said minus ion generating means (17,19) holding a generation electrode (22) within a protective container (23),
said generation electrode (22) comprising a plurality of electrode plates (20), and a plurality of needle-like electrodes (21) which are integral with the electrode plates (20) and projected toward an air blowing leeward side,
said needle-like electrodes (21) being arranged in parallel to one another, extending in the air blow direction, and having tip ends oriented toward the air blowing leeward side and exposed in the air blow-off part, and
said protective container (23) having slits (30) provided at those areas opposite to the tip ends of the needle-like electrodes (21) and opened in the air blow direction of the air blowing path (8), said protective container (23) having an antistatically treated surface.

5. An indoor unit for an air conditioner according to claim 4, wherein
said protective container (21) has a ground area (E) in a position spaced apart from the generation electrode (23),
said ground area (E) is spaced apart from the generation electrode (22) by a distance that causes no arc discharge,
said ground area (E) is displaced from a front end extension line of the generation electrode (22), and located on the air blowing leeward side of the generation electrode (22).

6. An indoor unit for an air conditioner according to claim 5, wherein the ground area (E) of the protective container (23) is such that a ground line (25) is connected by a mounting means (24) to a boss (23c) provided integral with the surface of the protective container (23), and
a lower hole (27) pierces the boss (23c) at upper and lower ends, the mounting means (24) is mounted into the lower hole (27) from an upper end of the boss (23c), the mounting means (24) having a length shorter than a full length of the lower hole (27), and a ground terminal (28) is provided between the mounting means (24) and a top end face of the boss (23c) to achieve connection of the ground line (25).

## Patentansprüche

1. Innenraumeinheit (1) für eine Klimaanlage, die Zimmerluft in einen Einheitskorpus ansaugt, einen Wärmeaustausch der Luft durch einen Wärmetauscher (5) bewirkt und die Luft in den Raum über ein Luftgebläse (7) bläst, mit:
einem Luftreinigungsmittel (13), das sich an einer Luftansaugseite des Wärmetauschers (5) befindet, um das Entfernen einer Verunreinigung aus der in den Einheitskorpus angesaugten Zimmerluft zu ermöglichen und diese zu reinigen; und
einem Negative-Ionenerzeugungsmittel (17, 19), das sich in der Luftausblasbahn des Luftgebläses (7) befindet, um die Erzeugung negativer Ionen zu ermöglichen und diese dem Raum zuzuführen;
bei der das Luftreinigungsmittel (13) eine elektrische Staubsammelmaschine (13A) besitzt, die aufweist: eine Ladungselektrode und eine Staubsammelelektrode (15), die sich stromabwärts der Ladungselektrode (14) befindet;
einem Steuermittel (40) zum Bewirken der Steuerung einer Luftreinigungsfunktion durch das Luftreinigungsmittel (13) und einer Negativionenerzeugungsfunktion durch das Negative-Ionenerzeugungsmittel (17, 19) gleichzeitig und miteinander, wobei das Negative-Ionenerzeugungsmittel (17, 19) eine Negative-Ionenerzeugungselektrode (22) zum Abstrahlen der Negativ-Ionen in die gereinigte Luft und zum Zuführen der Negativ-Ionen in den Raum aufweist;
**dadurch gekennzeichnet, dass** die Ladungselektrode (14) aufweist:
eine Entladungselektrode (14a) und eine zugewandte Elektrode (14b) zum Aufladen von Staub, der in der Raumluft enthalten ist, auf ein positives Potential durch Auslösen einer Korona-Entladung durch das Anlegen einer hohen DC-Spannung zwischen der Entladungselektrode (14a) und der zugewandten Elektrode (14b);
und dass die Staubsammelelektrode (15) auf ein negatives Potential aufgeladen wird zum Adsorbieren des Staubs, der positiv geladen ist.

2. Innenraumeinheit für eine Klimaanlage nach Anspruch 1, bei der das Steuermittel (40) vorgesehen ist zum Bewirken der Steuerung einer Luftreinigungsfunktion durch das Luftreinigungsmittel (13) und einer Negative-Ionenerzeugungsfunktion durch das Negative-Ionenerzeugungsmittel (17, 19) gleichzeitig und zusammen mit einer Wärmeaustauschfunktion durch den Wärmetauscher (5).

3. Innenraumeinheit für eine Klimaanlage nach Anspruch 1, bei der der Einheitskorpus ein Sauggitter besitzt, das an einer Ansaugseite der Zimmerluft öffenbar/schließbar ist, bei der das Steuermittel (40) vorgesehen ist zum Bewirken solch einer Steuerung, dass, wenn das Luftreinigungsmittel (13) in einen abnormalen Zustand gerät, oder wenn das Sauggitter in einen geöffneten Zustand gebracht wird, das Luftreinigungsmittel (13) und das Negative-Ionenerzeugungsmittel (17, 19) ihre Funktionen beenden.

4. Innenraumeinheit für eine Klimaanlage nach einem der vorhergehenden Ansprüche, bei der das Negative-Ionenerzeugungsmittel (17, 19) sich in der Nähe eines Ausblasanschlusses (9) einer Luftausblasbahn des Luftgebläses (7) befindet und an einer oberen Wand des Ausblasanschlusses (9) angebracht ist,
das Negative-Ionenerzeugungsmittel (17, 19) eine Erzeugungselektrode (22) innerhalb eines Schutzbehälters (23) hält, wobei die Erzeugungselektrode (22) eine Vielzahl von Elektrodenplatten (20) und eine Vielzahl von nadelförmigen Elektroden (21) aufweist, die integral mit den Elektrodenplatten (20) ausgebildet sind und zu einer leewärtigen Luftblasseite hin überstehen,
die nadelförmigen Elektroden (21) parallel zueinander angeordnet sind und sich in der Luftblasrichtung erstrecken und spitze Enden besitzen, die zu der leewärtigen Luftblasseite hin ausgerichtet sind und in dem Luftausblasanschluss freigelegt sind, und
der Schutzbehälter (23) Schlitze (30) besitzt, die an solchen Bereichen gegenüberliegend zu den spitzen Enden der nadelförmigen Elektroden (21) vorgesehen sind und in die Luftblasrichtung der Luftblasbahn (8) geöffnet sind, wobei der Schutzbehälter (23) eine antistatisch behandelte Oberfläche besitzt.

5. Innenraumeinheit für eine Klimaanlage nach Anspruch 4, bei der
der Schutzbehälter (21) einen Erdungsbereich (E) an einer Position besitzt, die von der Erzeugungselektrode (23) beabstandet ist,
der Erdungsbereich (E) von der Erzeugungselektrode (22) um einen Abstand beabstandet ist, so dass keine Bogenentladung bewirkt wird,
der Erdungsbereich (E) von einer Verlängerungslinie am vorderen Ende der Erzeugungselektrode (22) verschoben ist und sich an der leewärtigen Luftblasseite der Erzeugungselektrode (22) befindet.

6. Innenraumeinheit für eine Klimaanlage nach Anspruch 5, bei der der Erdungsbereich (E) des Schutzbehälters (23) derart ist, dass eine Erdungsleitung (25) durch ein Befestigungsmittel (24) mit einem Ansatz (23c) verbunden ist, der integral mit der Oberfläche des Schutzbehälters (23) vorgesehen ist, und
ein unteres Loch (27) den Ansatz (23c) an einem oberen und unteren Ende durchdringt, das Befestigungsmittel (24) in das untere Loch (27) von einem oberen Ende des Ansatzes (23c) befestigt ist, das Befestigungsmittel (24) eine Länge besitzt, die kürzer als eine volle Länge des unteren Loches (27) ist, und ein Erdungsanschluss (28) zwischen dem Befestigungsmittel (24) und einer oberen Endfläche des Ansatzes (23c) vorgesehen ist, um eine Verbindung mit der Erdungsleitung (25) zu erzielen.

## Revendications

1. Unité intérieure (1) pour un climatiseur qui aspire l'air de la pièce dans un corps d'unité, effectue un échange de chaleur de l'air par un échangeur de chaleur (5) et souffle l'air dans la pièce via une soufflerie d'air (7), comprenant :
des moyens de nettoyage d'air (13) situés sur un côté d'aspiration d'air de l'échangeur de chaleur (5) pour permettre aux impuretés d'être enlevées de l'air de la pièce aspiré dans le corps d'unité et nettoyées ; et
des moyens de génération d'ions négatifs (17, 19) situés dans un passage de soufflage d'air de la soufflerie d'air (7) pour permettre à des ions négatifs d'être générés et alimentés dans la pièce ;
dans lequel lesdits moyens de nettoyage d'air (13) ont une machine de collecte de poussière électrique (13A) comprenant : une électrode de charge (14) et une électrode de collecte de poussière (15), située en aval de l'électrode de charge (14) ;
des moyens de commande (40) pour effectuer la commande en liaison avec une fonction de nettoyage d'air par les moyens de nettoyage d'air (13) et une fonction de génération d'ions négatifs par les moyens de génération d'ions négatifs (17, 19) ;
les moyens de génération d'ions négatifs (17, 19) étant composés d'une électrode de génération d'ions négatifs (22) pour irradier les ions négatifs dans l'air nettoyé et alimenter les ions négatifs dans la pièce ;
**caractérisée en ce que** l'électrode de charge (14) comprend :
une électrode de décharge (14a) et une électrode lui faisant face (14b) pour charger la poussière à un potentiel positif en provoquant une décharge corona, par l'application d'une haute tension continue entre ladite électrode de décharge (14a) et ladite électrode lui faisant face (14b) ;
**en ce que** l'électrode de collecte de poussière (15) est chargée à un potentiel négatif, pour absorber la poussière qui est chargée positivement.

2. Unité intérieure pour un climatiseur selon la revendication 1, dans laquelle lesdits moyens de commande (40) sont prévus pour effectuer une commande liée d'une fonction d'échange de chaleur par l'échangeur de chaleur (5), une fonction de nettoyage d'air par les moyens de nettoyage d'air (13) et une fonction de génération d'ions négatifs par les moyens de génération d'ions négatifs (17, 19).

3. Unité intérieure pour un climatiseur selon la revendication 1, dans laquelle le corps d'unité a une grille d'aspiration ouvrable/fermable sur un côté d'aspiration de l'air de la pièce,
lesdits moyens de commande (40) sont prévus pour effectuer une commande telle que, quand les moyens de nettoyage d'air (13) deviennent dans un état anormal, ou quand la grille d'aspiration est réglée dans un état ouvert, les moyens de nettoyage d'air (13) et les moyens de génération d'ions négatifs (17, 19) stoppent leurs fonctions.

4. Unité intérieure pour un climatiseur selon l'une quelconque des revendications précédentes, dans laquelle lesdits moyens de génération d'ions négatifs (17, 19) sont situés près d'un orifice de soufflage (9) d'un passage de soufflage d'air de la soufflerie d'air (7) et fixés sur une paroi supérieure de l'orifice de soufflage (9),
lesdits moyens de génération d'ions négatifs (17, 19) supportant une électrode de génération (22) dans un récipient protecteur (23),
ladite électrode de génération (22) comprenant une pluralité de plaques d'électrode (20), et une pluralité d'électrodes en pointe (21) qui sont intégrales avec les plaques d'électrode (20) et font saillie vers un côté sous le vent de l'air soufflé,
lesdites électrodes en pointe (21) étant agencées en parallèle l'une à l'autre, s'étendant dans la direction de soufflage d'air, et ayant des extrémités orientées vers le côté sous le vent de l'air soufflé et exposées dans la partie de soufflage d'air, et
ledit récipient protecteur (23) ayant des fentes (30) placées en ces zones opposées aux extrémités des électrodes en pointe (21) et ouvertes dans la direction de soufflage d'air du passage de soufflage d'air (8), ledit récipient protecteur (23) ayant une surface traitée anti-statiquement.

5. Unité intérieure pour un climatiseur selon la revendication 4, dans laquelle
ledit récipient protecteur (21) a une zone de terre (E) dans une position espacée de l'électrode de génération (23)
ladite zone de terre (E) est espacée de l'électrode de génération (22) d'une distance qui ne provoque pas de décharge d'arc,
ladite zone de terre (E) est déplacée d'une ligne d'extension d'extrémité avant de l'électrode de génération (22), et située sur le côté sous le vent de l'air soufflé de l'électrode de génération (22).

6. Unité intérieure pour un climatiseur selon la revendication 5, dans laquelle la zone de terre (E) du récipient protecteur (23) est telle qu'une ligne de terre (25) est connectée par des moyens de montage (24) à un bossage (23c) intégral avec la surface du récipient protecteur (23), et
un trou inférieur (27) perce le bossage (23c) aux extrémités inférieure et supérieure, les moyens de montage (24) sont montés dans le trou inférieur (27) depuis une extrémité supérieure du bossage (23c), les moyens de montage (24) ayant une longueur plus courte que toute la longueur du trou inférieur (27), et une borne de terre (28) est placée entre les moyens de montage (24) et une face d'extrémité supérieure du bossage (23c) pour terminer la connexion de la ligne de terre (25).
